# EUROPEAN PATENT APPLICATION

(11) **EP 1 471 476 A1**
(43) Date of publication of application: **27.10.2004**
(21) Application number: 04252425.6
(22) Date of filing: 26.04.2004
(51) Int. Cl.: G07F 19/00, G06F 17/60

(54) **Method and system for network-based allowance control**

(30) Priority: 25.04.2003 US 465410 P; 15.10.2003 US 688213; 10.02.2004 US 776403
(71) Applicant: APPLE COMPUTER, INC., Cupertino, CA 95014 (US)
(72) Inventor: Gautier, Patrice, San Francisco, CA 94121 (US); Burkholder, Thomas, North Vancouver, BC V7H-1V5 (CA); Mirrashidi, Payam, San Francisco, CA 94109 (US)
(74) Representative: Alton, Andrew

(57) **Abstract**

Methods and systems for network-based allowance control are disclosed. A user creates an allowance in association with a recipient account such that funds are available in the recipient account for use by a recipient for the purchase of goods over a network (e.g., Internet). Specifically, by creating an allowance, a user initiates a periodic (recurring) transfer (i.e., credit) of an amount of money (i.e., funds) to the recipient account. This money may then be used by the recipient for the purchase of goods over the network. The recipient account may be related to a parent account as a sub-account, enabling the user of the parent account to monitor purchases made by the recipient, as well as limit the items that can be purchased by the recipient.

## Description

The present invention relates to allowance control and, more particularly, to allowance control in a client-server environment.

Traditionally, music has been purchased at music stores or music departments of larger stores. A consumer will visit the music store or department and manually browse for albums or compact discs (CDs) of interest. Often, the music in the music store or department is categorized by genre, and then indexed by artist. For example, genre can include rock, country, pop, soul, jazz, etc. After the consumer selects an album or CD of interest, the consumer proceeds to a check-out register to pay for the album or CD being purchased.

In recent years music delivery or distribution over the Internet has become popular. Due to the advances in efficient file formats, such as MP3 and MPEG4, the size of media files have become small enough to make their download via the Internet practical. Also, technological advances have led to higher-speed Internet connections and lower cost of memory. The combination of these advances make downloading media files, such as for music and videos, manageable and not too time consuming.

One popular approach to music distribution is mp3.com which uses a centralized server for storage of the numerous songs that are available for download. Another popular approach to music distribution was Napster in which peer-to-peer sharing was utilized. With peer-to-peer sharing, the numerous songs reside on the user machines of the many users, not on a centralized server.

Various Internet web sites have made it possible to purchase goods through the use of a credit card. In order to purchase goods, the purchaser must typically enter his or her credit card information for each purchase. Some web sites have made it possible for repeat customers to simplify this process by storing the user's credit card information so that this information need not be re-entered for each purchase. However, it is impossible for the purchaser to track the amount that is purchased from each web site. In fact, the purchaser may not be aware of how much he or she is spending until the credit card bill is received at the end of the month. As a result, there is a need for a mechanism to enable a user to monitor or limit his or her purchases made via a particular web site.

A purchaser may also wish to give a gift to a recipient for the purchase of goods at a specific web site. Some Internet web sites enable such a purchaser to purchase a gift certificate which may be redeemed by the recipient. However, such gift certificates must often be mailed to the recipient in order for them to receive the gift certificate. As a result, there is a risk that the gift certificates will not be received, either due to mistakes made at the post office or as a result of being stolen from the recipient's mail box. Moreover, gift certificates may easily be lost by the recipient, and therefore are inappropriate for certain individuals such as young children. It is also important to note that a gift certificate is typically purchased in instances such as holidays or birthdays when a one-time gift is intended. However, in many instances an individual may wish to give a repeated gift over a period of time to another individual.

For example, a parent may give his or her child a specified sum of money on a weekly basis. If a parent wished to limit the child's use of the money to a particular web site, the parent would have to give a gift certificate to the child, either for a single week's allowance, or for a larger sum intended to cover multiple weeks. Unfortunately, if the parent wished to give the child a larger sum, the child would either receive the gift certificate prior to the end of the total period of time, or the child would have to wait until the total time had expired. As a result, the child would not learn to budget his or her money as the parent had intended.

Some parents have chosen to let children borrow their credit cards for specific purchases. However, fearing unlimited access to the Internet, a parent may be hesitant to give his or her credit card to a child without supervision. In view of the above, there is a need for a more secure mechanism for issuing a gift of a sum of money for use by an individual for redemption at a particular web site. Moreover, it would be beneficial if such a gift could be issued repeatedly over a period of time, rather than be limited to a one-time purchase.

The present invention pertains to methods and apparatus for creating an allowance. Specifically, a user may transfer (i.e., credit) an amount of money (i.e., funds) to a recipient account associated with a recipient. This money may then be used by the recipient for the purchase of goods over a network (e.g., Internet). The disclosed embodiments may be implemented in association with a web site supporting the recipient's account, thereby enabling the recipient to purchase goods via the web site using the money transferred to the recipient's account.

In the following description, the money (i.e., funds) that is transferred to the recipient account on a recurring basis will be referred to as an "allowance." The allowance is transferred to the recipient account on a periodic basis. Thus, the amount of money that is transferred periodically will be referred to as an "allowance increment."

In accordance with one aspect of the invention, methods and apparatus for transferring an amount of money to a recipient account associated with a recipient are disclosed, where the amount of money is available for use by the recipient for the purchase of goods over a network. An allowance request is received from a user indicating a request to set up an allowance for a recipient. The allowance represents an amount of money being made available by the user to the recipient for purchase of one or more items over the network. In addition, an allowance increment or selection of an allowance increment is received The allowance increment indicates an amount of money to be transferred to the recipient account on a periodic basis.

In accordance with another aspect of the invention, methods and apparatus for transferring an amount of money to a recipient account associated with a recipient include transmitting an allowance message to the recipient, the allowance message indicating that an allowance is being made available by a user in a recipient account associated with the recipient. As described above, the allowance represents an amount of money being made available to the recipient for purchase of one or more items over the network, and the allowance is transferred to the recipient account in one or more allowance increments on a periodic basis. A request to purchase one or more items over the network using the allowance established in the recipient account may then be received from the recipient.

Receiving the request to purchase one or more items can comprises receiving the request via a web site over the network.

The allowance can be a monthly allowance, and the allowance increment can be transferred to the recipient account on a monthly basis.

Each of the allowance increments can be transferred from a user account associated with the user to the recipient account on a periodic basis.

Each of the allowance increments can be transferred from a credit card associated with the user to the recipient account on a periodic basis.

The method can further comprise providing a balance associated with the recipient account.

In accordance with yet another aspect of the invention, methods and apparatus for facilitating the transfer of money to one or more recipient accounts associated with one or more recipients, where the money is made available for use by the recipients for purchase of goods over a network, are disclosed. Specifically, a list of one or more recipient accounts is maintained, where each of the recipient accounts has an associated allowance increment indicating an amount of money to be transferred to the recipient account on a periodic basis. The allowance increment associated with each of the recipient accounts is automatically transferred to the corresponding recipient account on a periodic basis. In this manner, a server may maintain the information pertinent to maintaining and updating recipient accounts in association with established allowances.

The invention also relates to graphical user interfaces that assist users in creating an allowance, as well as those that notify both the user and recipient that the allowance has been established. For instance, a graphical user interface for use in facilitating the transfer of money to a recipient account associated with a recipient is disclosed. A recipient identifier field identifies a recipient of an allowance and/or recipient account. In addition, an allowance field enables input or selection of an allowance increment. The allowance increment indicates an amount of money to be transferred to the recipient account on a periodic basis.

Another aspect of the invention pertains to methods and apparatus for implementing two or more related accounts, the user of each of the related accounts being capable of performing one or more transactions via a web site over the Internet. One or more sub-accounts are created, the user associated with each of the sub-accounts being capable of purchasing one or more items from the web site over the Internet. The one or more sub-accounts are associated with a parent account such that the user associated with the parent account is capable of monitoring transactions performed by each of the sub-accounts. In addition, the user associated with the parent account is capable of limiting the transactions performed by each of the sub-accounts. For instance, a recipient of an allowance may be prevented from purchasing songs with explicit lyrics or albums that have a parental warning associated therewith. Moreover, the user of the parent account may be able to monitor the purchase transactions associated with each sub-account. With respect to each of the sub-accounts, information associated with the corresponding sub-account can be viewed by the user associated with the sub-account, but information associated with the parent account cannot be viewed. For instance, the purchase history of the sub-account can be viewed, but the purchase history of the parent account cannot be viewed.

A user associated with the parent account can limit the items that can be purchased by a purchaser associated with each of the sub-accounts.

In accordance with yet another aspect of the invention, a system adapted for implementing two or more related accounts, each of the related accounts being capable of performing one or more transactions via a web site over the Internet, and the related accounts including a parent account and one or more sub-accounts. The user associated with the parent account has the authority to view a transaction history of each of the sub-accounts and the authority to limit the transactions that can be performed by each of the sub-accounts. The user/recipient associated with each of the sub-accounts can view information associated with the corresponding sub-account, but cannot view information associated with the parent account.

The invention can be implemented in numerous ways, including as a method, system, device, apparatus, graphical user interface, or computer readable medium. Other aspects and advantages of the invention will become apparent from the following detailed description taken in conjunction with the accompanying drawings which illustrate, by way of example, the principles of the invention.

The invention will be readily understood by the following detailed description in conjunction with the accompanying drawings, wherein like reference numerals designate like structural elements, and in which:
FIG. 1 is a block diagram of a media purchase system according to one embodiment of the invention.
FIGs. 2A and 2B are screen shots illustrating explicit content notification features according to one embodiment of the invention.
FIG. 3 is a screen shot of an application program window according to one embodiment of the invention.
FIG. 4A is a process flow diagram illustrating a method of creating an allowance account in accordance with one embodiment of the invention.
FIG. 4B is a process flow diagram illustrating a specific method of creating an allowance account in accordance with one embodiment of the invention.
FIG. 5 is a screen shot of a graphical user interface enabling an allowance to be set up in accordance with one embodiment of the invention.
FIG. 6 is a screen shot of a graphical user interface enabling a "lite" account to be set up for the recipient of the allowance in accordance with one embodiment of the invention.
FIG. 7 is a screen shot of a window presented to the purchaser of the allowance in accordance with one embodiment of the invention.
FIG. 8 is an exemplary message presented to the recipient of the allowance in accordance with one embodiment of the invention.

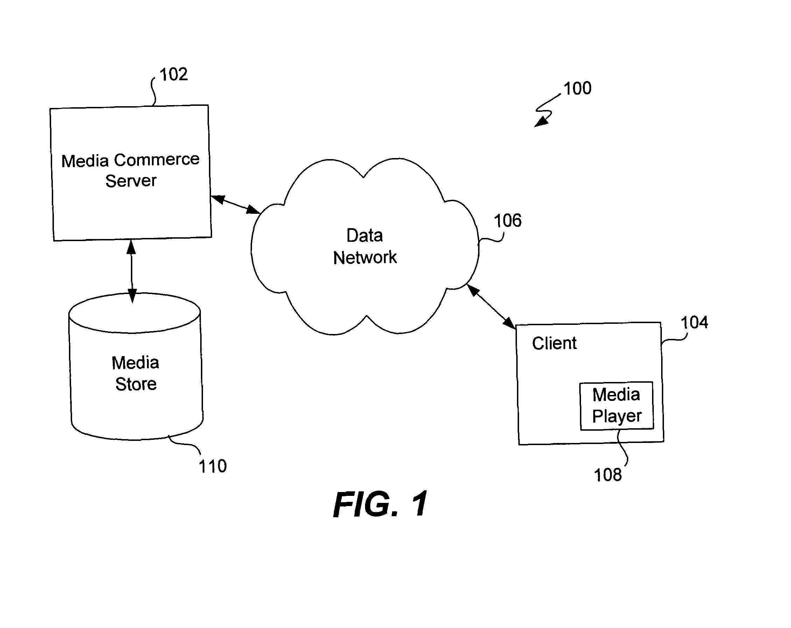

Embodiments of various aspects of the invention are discussed below with reference to FIGs. 1 - 8 However, those skilled in the art will readily appreciate that the detailed description given herein with respect to these figures is for explanatory purposes as the invention extends beyond these limited embodiments.

One aspect of the invention pertains to a system and method for creating an allowance.
In the following description, the money (i.e., funds) that is transferred to the recipient account on a recurring basis will be referred to as an "allowance." The amount of money that is transferred periodically will be referred to as an "allowance increment." In this manner, a user may transfer (i.e., credit) an amount of money (i.e., funds) to a recipient account associated with a recipient. This money may then be used by the recipient for the purchase of goods over a network (e.g., Internet). Specifically, the disclosed embodiments may be implemented in association with a web site supporting the recipient's account, thereby enabling the recipient to purchase goods via the web site using the money transferred to the recipient's account.

Another aspect of the invention pertains to a system and method for purchasing items such as media items over a network using the allowance that has been established. A potential purchaser can search and browse through numerous media items on-line that are available for purchase. The potential purchaser can thereafter purchase one or more media items on-line with great ease. Upon purchasing a media item, the content for the media item can be downloaded over the network to the purchaser. The content for the media item is then encrypted for the purchaser's use and stored on the purchaser's machine. Thereafter, the purchaser can make use of the media item (e.g., play the media item).

Still another aspect of the invention pertains to a graphical user interface suitable for assisting users in creating an allowance, as well as those that notify both the user and recipient that the allowance has been established. For instance, a graphical user interface for use in facilitating the transfer of money to a recipient account associated with a recipient is provided. A recipient identifier field identifies a recipient of an allowance and/or recipient account. In addition, an allowance field enables input or selection of an allowance increment. The allowance increment indicates an amount of money to be transferred to the recipient account on a periodic basis.

FIG. 1 is a block diagram of a media purchase system 100 according to one embodiment of the invention. The media purchase system 100 includes a media commerce server 102. The media commerce server 102 coordinates review and/or purchase of media items through on-line transactions. On-line transactions to purchase media items is also referred to as electronic commerce (e-commerce). The media purchase system 100 also includes a client 104. Typically, the media purchase system 100 would include a plurality of different clients 104. Each client 104 includes a media player 108. The media player 108 is an application program (e.g., software application) that operates on the client 104, which is a computing device. The client 104 is coupled to the media commerce server 102 through a data network 106. Hence, any of the clients 104 can interact with the media commerce server 102 to review and/or purchase media items. In one embodiment, the data network 106 includes at least a portion of the Internet. The clients 104 can vary with application but generally are computing devices that have memory storage. Often, the clients 104 are personal computers or other computing devices that are capable of storing and presenting media to their users.

The media purchase system 100 also includes a media store 110. The media store 112 provides mass storage of the numerous media items that are available for purchase via the media purchase system 100. Once purchased, the media items can be accessed from the media store 112 over the data network 106 by way of the media commerce server 110.

More particularly, the media purchase system 100 allows a user of the client 104 to utilize the media player 108 to browse, search or sort through a plurality of media items that can be purchased from the media commerce server 102. The media player 108 may also allow the user to preview a media clip of the media items. In the event that the user of the media player 108 desires to purchase a particular media item, the user (via the media player 108) and the media commerce server 102 engage in an on-line commerce transaction in which the user pays for access rights to the particular media item. In one embodiment, a credit card associated with the user is credited for the purchase amount of the particular media item.

In the media purchase system 100, the media items are stored in the media store 112 and retrieved via the media commerce server 102. However, a separate media storage server could additionally be provided and coupled between the data network 106 and the media store 110. The benefit of such a media storage server would be that the media commerce server 102 need not burden its resources to deliver any of the media items that may be purchased to the client 104. Instead, on purchasing a particular media item, the media commerce server 102 sends download information to the media player 108 on the client 104. The download information can then be used by the media player 108 (and the client 104) to retrieve the media content for the particular media item by interacting with the media storage server through the data network 106. In this regard, the media storage server obtains the media content corresponding to the particular media item from the media store 112 and downloads such content through the data network 106 to the client 104. The downloaded media content can then be stored on the client 104. In one embodiment, the downloaded media content is encrypted as received at the client 104 but is decrypted and then re-encrypted before persistent storage on the client 104.
Thereafter, the media player 108 can present (e.g., play) the media content at the client 104. In addition, media search processing/browsing may be performed by an application program operating on a client. The application program is, for example, the media player 108 illustrated in FIG. 1.

Here, in one example, the media commerce server 102 illustrated in FIG. 1 can also serve as the media storage server. However, it is important to note that these functions may be implemented in separate servers. The search request is a request to the remote media server to perform a search in accordance with the search criteria for a particular song or album. Here, the media commerce server 102 includes at least information (e.g., metadata) for a large number of media items that are available to be purchased from the media commerce server 102, though the content of the media items that are purchased may be acquired at the client via download with respect to another remote server, such as the media storage server.

As will be described in further detail below, an allowance may be established by a user for a recipient via the media commerce server 102. For each allowance that is established for a recipient, the media commerce server 102 transfers an amount of money equal to the allowance increment to the recipient account on a periodic basis. Thus, the server 102 automatically transfers each allowance increment on a periodic basis to each recipient account. As a result, the server 102 maintains a list of allowances that need to be periodically processed. For instance, this list may include recipient account identifiers and allowance increments. The list may also include, or be linked to, billing information such as the credit card information of the user who established the allowance for the recipient.

The connections through the data network 106 between the media commerce server 102, the client 104 and the media storage server can be through secure connections, such as Secure Sockets Layer (SSL). Further, the media content is re-encrypted prior to storage at the client 104 such that downloaded media content is not stored in the clear, but is instead stored in an encrypted manner.

As discussed in greater detail below, the media player 108 can utilize an improved graphical user interface. More particularly, in one embodiment, a window presented on a display device of the client 104, when executing the media player 108, includes an upper window that displays content provided by the media commerce server 102 in a browser-like manner, and a lower window displays content provided by the media commerce server 102 in a typical media player-like manner. In another embodiment, a window presented on a display device of the client 104, when executing the media player 108, includes an upper window that displays a multi-tier browse interface that implements a browse function with respect to the media items through interaction with the media commerce server 102.

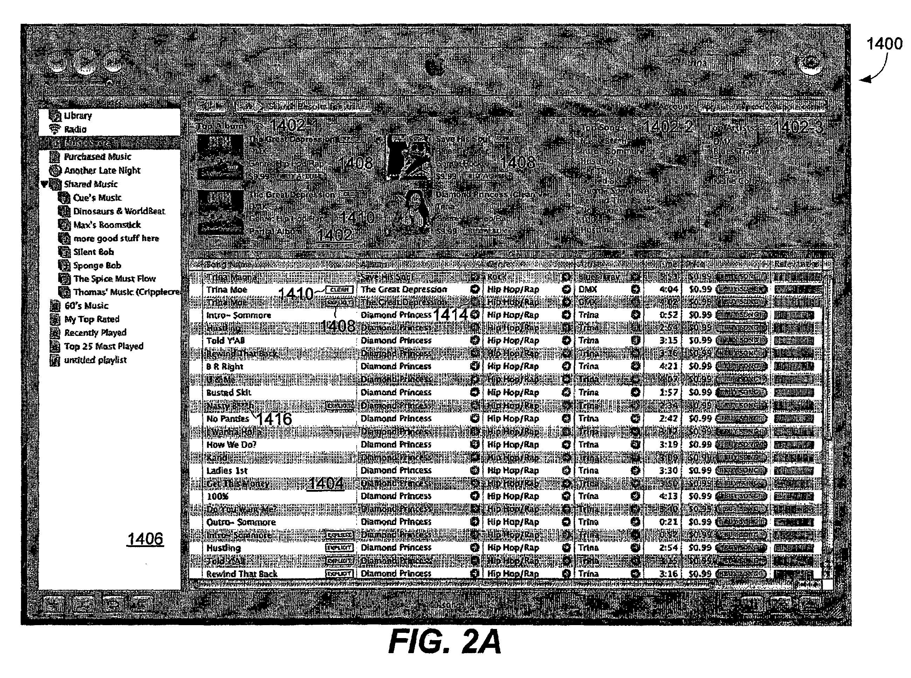

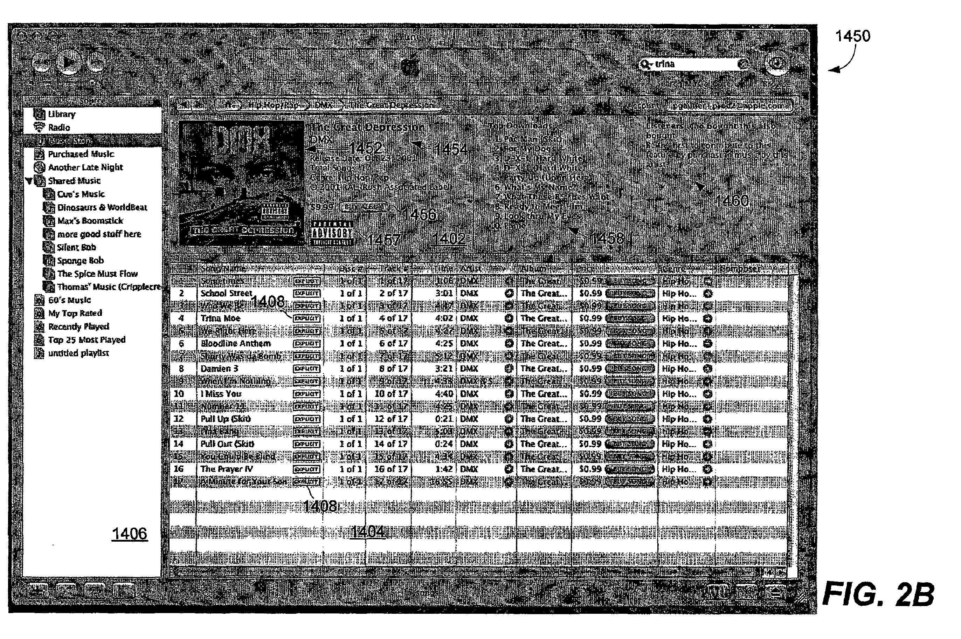

Still another aspect of the invention pertains to informing the users about explicit content that may be present in songs or albums. FIGs. 2A and 2B are screen shots illustrating explicit content notification features according to one embodiment of the invention.

FIG. 2A is a screen shot of an application program window 1400 according to one embodiment of the invention. The application program window 1400 includes a first sub-window 1402, a second sub-window 1404, and a third sub-window 1406. The first sub-window 1402 includes a Top Albums region 1402-1, a Top Songs region 1402-2, and a Top Artists region 1402-3. The Top Albums region 1402-1 contains those albums that match search criteria. For example, in this example, the search criteria was "trina" and the Top Albums regions 1402-1 depicts four separate albums that were identified by searching the music database with respect to the search criteria "trina". The Top Songs region 1402-2 includes a list of top songs with respect to any of the albums listed in the Top Albums regions 1402-1. The Top Artists region 1402-3 can represent the top artists with respect to the albums within the Top Albums region 1402-1. Alternatively, the Top Songs region 1402-2 in the top artists region 1402-3 could be top songs for the larger categories of genre, time period, or overall. Additionally, the second sub-window 1404 displays those songs that are associated with the albums within the Top Albums region 1402-1. In other words, the songs listed within the second sub-window 1404 are those songs that somehow relate to the search criteria.

It should also be noted that the application program window 1400 further includes explicit content indicators 1408 and clean content indicators 1410. In this regard, it is known that songs or albums can contain offensive language (e.g., expletives or other foul language) that is not appropriate for all audiences. Hence, albums or songs can be indicated as containing such explicit content through use of the explicit content indicator 1408. As shown in FIG. 2A, the explicit content indicator 1408 can be associated with an album, such as shown in the first sub-window 1402, and/or can be associated with individual songs, such as shown in the second sub-window 1404.

Further, in the case in which an album or song has explicit content, another version of the same album or song can be provided and thus made available for purchase with modifications to remove the explicit and potentially offending material. These types of songs or albums are indicated by the clean content indicator 1410.

If desired, a user can select one of the albums within the Top Albums region 1402-1 or through selection of one of the "go to" buttons 1414 for album information within the second sub-window 1404. If the user does select either the image 1412 or the "go to" button 1414, an application program window 1450 as shown in FIG. 2B would be produced according to one embodiment of the invention. In other words, the user selection was to select the album "The Great Depression" by DMX, namely, the explicit content version. As such, the first sub-window 1402 displays an image 1452 associated with the selected album, information 1454 pertaining to the album, and a "buy album" button 1456. Additionally, since the selected album has explicit content, the first sub-window 1402 can also display a parental advisory warning indication 1457 to alert potential purchasers that the selected album contains explicit content. The first sub-window 1402 can further include top downloads information 1458 and related song purchases information 1460. The second sub-window region 1404 can list those songs on the selected album. As shown in FIG. 2B, the selected album, "The Great Depression" contains seventeen songs or tracks, each of which is identified by an explicit content indicator 1408, thereby indicating that each of the songs or tracks contains explicit content.

Another aspect of the invention pertains to modification of media descriptors that contain offensive language. For example, media descriptors are often provided as titles to media items, such as albums, songs, videos or pictures. Occasionally, these media descriptors can contain offensive language. Hence, when media items are provided to a media store (or media database) to be stored and thus available for subsequent purchase, these media items can be reviewed to determine whether any offensive language is present within their media descriptors. Alternatively, the review for offensive language in the media descriptors can be done dynamically as these media items are requested by various media players. In either case, the offending portion of the media descriptors can be altered to remove the offensive language.

In one embodiment, each word within each of the media descriptors can be compared with a list of identified offending words stored in a file or database. For each offending word found with a media descriptor, a portion of the offensive word in the media descriptor can be altered through use of replacement characters. As an example, as shown in FIG. 2A, one of the song names (e.g., media descriptors) on the selected album is "Nasty Bitch". However, the song name is displayed as shown in FIG. 14A with a modified media designator 1416, namely, "Nasty B***h". Hence, in this embodiment, the internal characters of the offending word "bitch" were altered and thus replaced with an asterisk. The user knows how many characters were replaced by the number of asterisks and thus is provided with some context for the word even after it has been modified. However, once modified, the offending word is no longer offensive.

As shown, an allowance balance 1480 associated with a recipient account may be displayed. Each time the recipient purchases an item using the allowance, the balance of the allowance is decremented accordingly. In addition, upon each periodic transfer to the recipient account, the balance is updated. It is important to note that the user may also wish to purchase items via a credit card or other source. Thus, the allowance balance 1480 need not be decremented for each purchase made by a recipient.

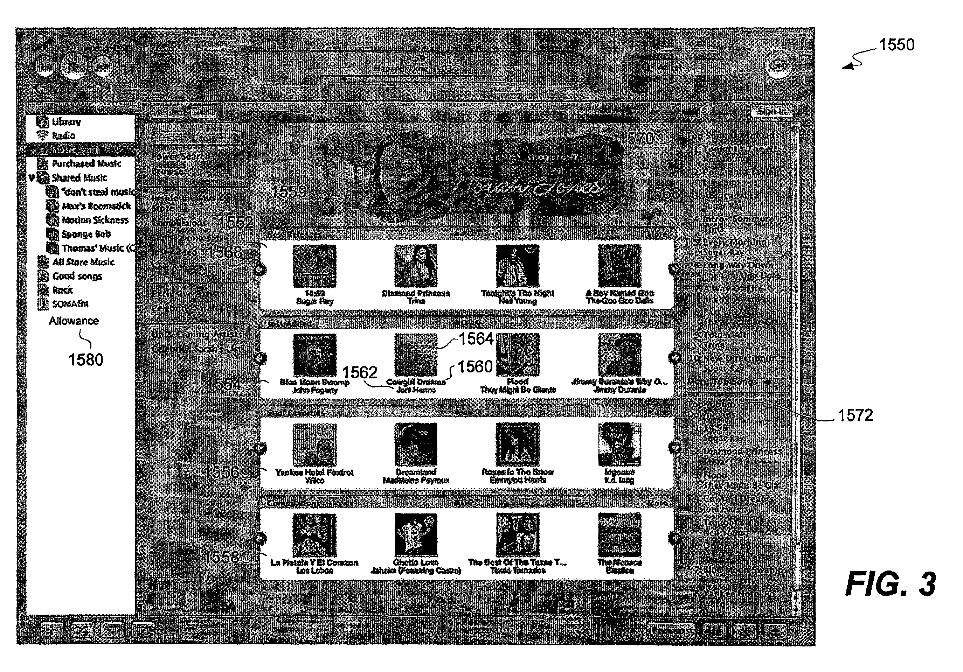

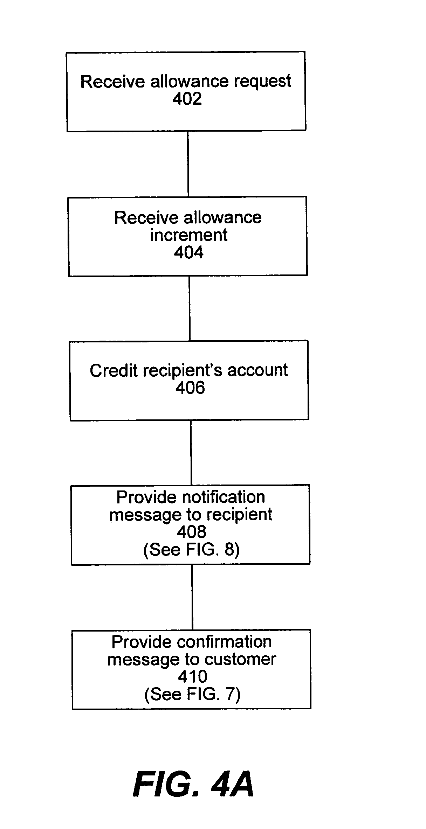

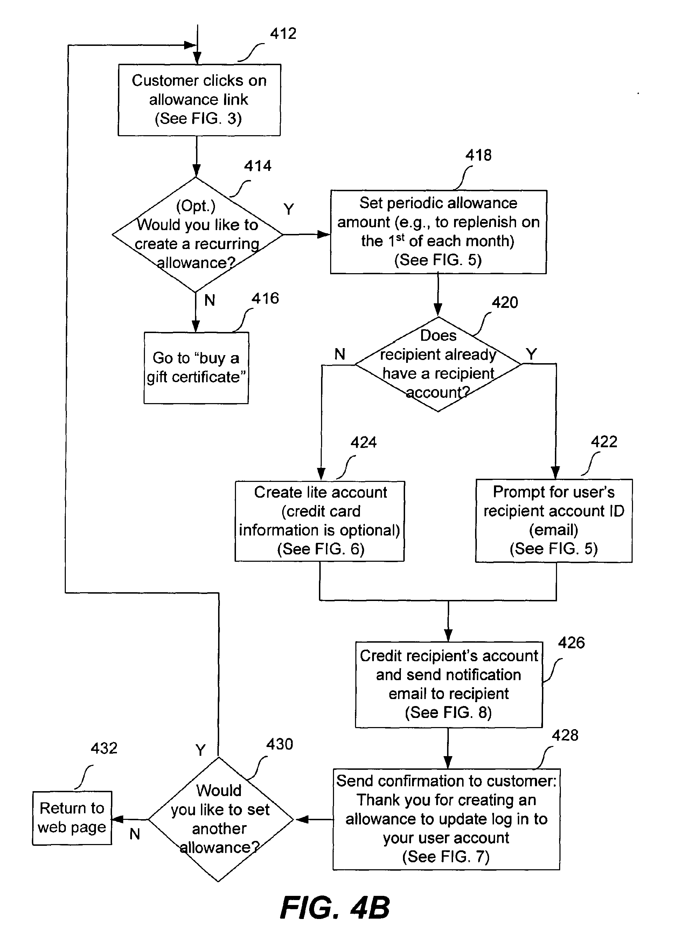

FIG. 3 is a screen shot of an application program window 1550 according to one embodiment of the invention. The application program window 1550, although produced by an application program, is presented in a network browser style, and thus looks like a web page in many respects. The application program window 1550, among other things, includes a first sub-window 1552, a second sub-window 1554, a third sub-window 1556, and a fourth sub-window 1558. Each of the sub-windows 1552-1558 displays four media items. More particularly, for each media item within each of the sub-windows 1552-1558, media information for each of the four media items is displayed. In one embodiment, for each media item being displayed within one of the sub-windows 1552-1558, the media item information being presented includes an album title 1560, an artist 1562, and album artwork 1564. The different sub-windows 1552-1558 represent different groupings or categories that the albums can be arranged in. In FIG. 3, the exemplary groupings or categories are New Releases, Just Added, Staff Favorites, and Compilations. In one embodiment, each of the sub-windows 1552-1558 pertains to a frame. For example, a frame boundary 1559 surrounds the sub-window 1552.

Hence, the user can simultaneously view the basic information on four media items (e.g., albums) within each of the sub-windows 1552-1558. However, when the user desires to view other albums within one of the groups or categories, then the user can select one of the next controls 1566 and 1568. For example, with respect to the first sub-window 1552, the user is able to transition to the left using the next control 1566, or transition to the right using the next control 1568. The other sub-windows 1554-1558 similarly have next controls. Upon the user's selection of the next control 1568, a next set of four albums would be requested from the remote server, and then when received, would be displayed within the first sub-window 1552, thereby replacing the four media items previously displayed therein. The transition from the former set of media items to a next set of media items can be performed with an animated transition such that the user is shown the effect of the transition or scroll to the next set.

Additionally, the application program window 1550 shown in FIG. 3 includes a top song downloads region 1570 and a top albums download region 1572. The top song downloads region 1570 includes a list of the top songs that have been downloaded from the music store that is offering the various media items for purchase. The top albums download region 1572 displays a list of top albums that have been downloaded by users of the music store.

In one embodiment, the set of media data for the associated sub-window is provided in a markup language format. In one example, the markup language format is extensible Markup Language (XML) based. In the case where the media items are albums, such as shown in FIG. 3, the artwork images are thumbnail sized so that the amount of data associated with a set of media data is relatively small and thus easily transmitted over a network from the remote server.

In order to create an allowance, the user submits an allowance request. As shown in FIG. 3, according to one embodiment, an allowance request can be initiated by a user selection. In particular, the allowance request can be initiated via an allowance hypertext link 1580 (allowance link). In processing the allowance request, the appropriate windows are generated in order to obtain the appropriate information from the user, as will be described in further detail below. For instance, the recipient name and/or recipient account, as well as the desired allowance increment, can be obtained. This information can be then stored upon creation of the allowance, thereby enabling a server to automatically process the periodic transfer of funds.

FIG. 4A is a process flow diagram illustrating a method of creating an allowance in accordance with one embodiment of the invention. As shown at block 402, an allowance request is received from a user that identifies at least a recipient and associated recipient account. In order to set up an allowance, the user can also specify or select an allowance increment at block 404. When the allowance has been set up in association with a recipient account, the recipient's account may then be periodically credited at block 406. For instance, the recipient's account may be updated every month, with the first month's allowance being credited when the allowance is established.

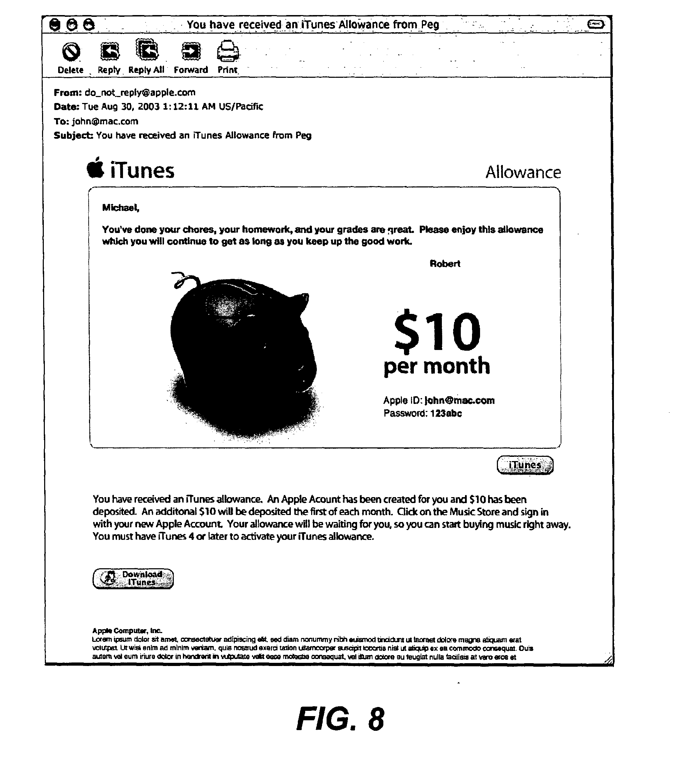

In order to notify the recipient that the allowance is available for his or her use, a notification message is provided to the recipient at block 408. For instance, the notification message may be implemented as a window or an email. In addition, this notification message may also include information enabling the recipient to access and use the allowance. As one example, the notification message may include the recipient's username (e.g., email address) as well as a temporary password. An exemplary notification message provided to the recipient will be described in further detail below with reference to FIG. 8.

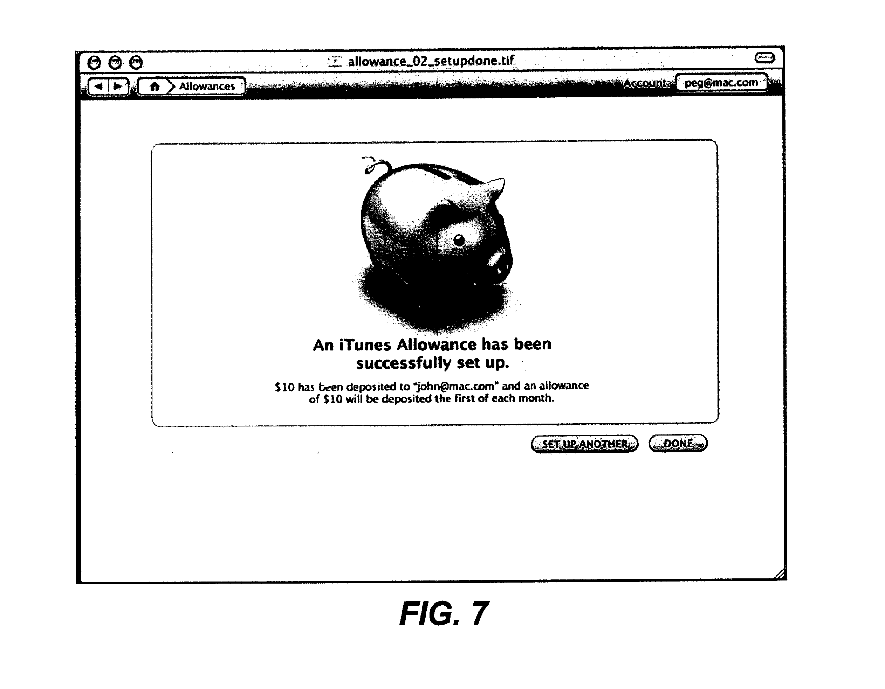

A confirmation message may also be provided to the user who established the allowance to confirm that the allowance has been successfully established at block 410. This confirmation message may be provided in the form of a window or an email. An exemplary confirmation message provided to the user will be described in further detail below with reference to FIG. 7.

FIG. 4B is a process flow diagram illustrating a specific method of creating an allowance account in accordance with another embodiment of the invention. As described above with reference to FIG. 3, the user may select (e.g., click on) the allowance link in order to establish an allowance for a recipient as shown at block 412. Thus, by clicking the allowance link, the user submits a request to set up an allowance for a recipient. An optional screen may then ask whether the user wants to create a recurring allowance at block 414. If the user does not want to create a recurring allowance, the user may purchase a gift certificate at 416.

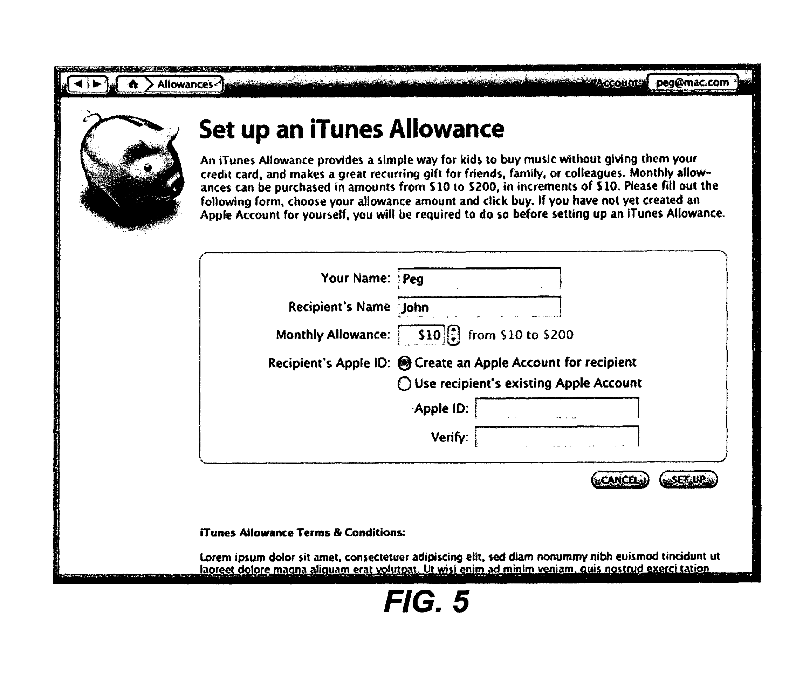

If the user wants to create a recurring allowance, the user establishes the allowance at block 418. In other embodiments, when the user clicks on the allowance link, the user is presented with a screen that enables the user to set up the allowance at block 418 (rather than being given the option of purchasing a gift certificate). For instance, the user may request that a specific amount (e.g., 25 dollars) be transferred to the recipient account every month (e.g., on the 1^{st} of each month). In addition to specifying the amount (i.e., allowance increment), the user may be permitted to specify the period of time (e.g., month or week) upon expiration of which the allowance increment is to be transferred to the recipient account. The process of creating an allowance for a recipient will be described in further detail below with reference to FIG. 5.

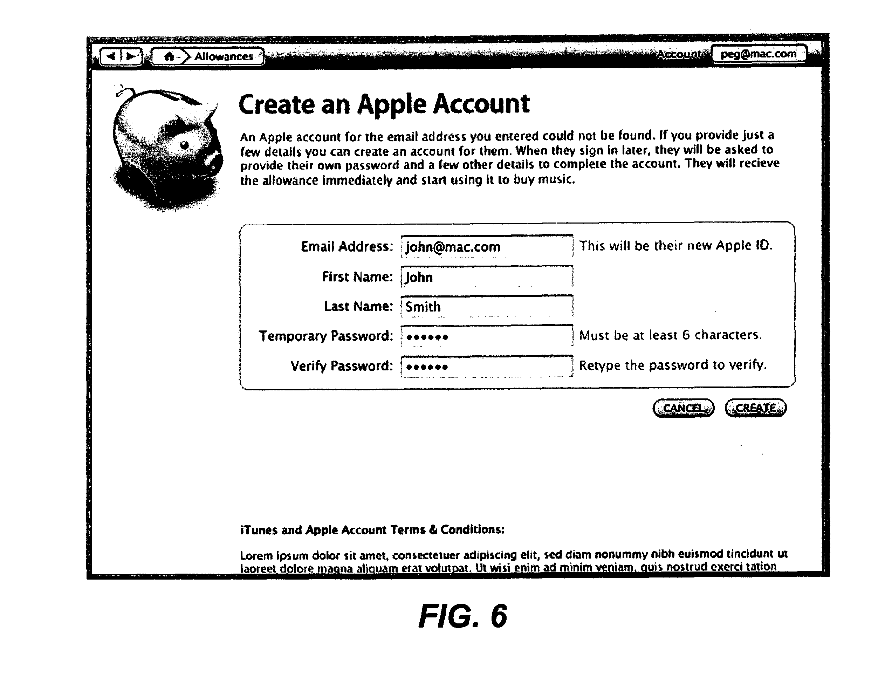

Next, it is determined whether the recipient already has an account (e.g., recipient account) with the web site (e.g., iTunes Music Store account) at block 420. If the recipient already has an account, the user enters the recipient account identifier (e.g., username or email address) at block 422, as will be described in further detail below with reference to FIG. 5. If the recipient does not have an account with the web site, the user creates a recipient account at block 424. Since the recipient account need only be capable of receiving funds from another individual or account, credit card information need not be stored in association with the recipient account. Such an account will be referred to as a "lite" account. The process of creating a recipient account will be described in further detail below with reference to FIG. 6.

Upon creation of the recipient account, the allowance increment will be transferred on a periodic basis. The first allowance increment may be transferred immediately when the allowance has been created, or on a specific day, such as the first day of the month. In those embodiments in which the first allowance increment is transferred upon receipt of the allowance request, the crediting of the recipient account occurs. Specifically, each time the allowance increment is transferred at block 426, the recipient's account will be credited. Of course, if the allowance request is received after a specific date in the month, the crediting of the recipient account may skip the month or occur on some other predetermined day of the month, such as the first or last day of the month.

In addition, a notification message (e.g., email) may be sent to the recipient, either upon creation of the allowance and/or transferring funds to the recipient account. Such a message will be described in further detail below with reference to FIG. 8.

In addition to sending a notification message (e.g., email) to the recipient, a confirmation email may also be sent to the user at block 428. Specifically, the confirmation email may be sent to the user upon creation of the allowance and/or transferring funds to the recipient account. In addition, the email may inform the user that it is possible to update the allowance by logging in to the user's web site account. Such a confirmation email that is sent to the user will be described in further detail below with reference to FIG. 7.

As described above, the user may submit a request to update or modify a previously established allowance. For instance, the user may wish to modify the period of time upon expiration of which an allowance increment is transferred. As another example, the user may wish to modify the allowance increment to a second allowance increment. Moreover, the user may wish to discontinue the allowance for the recipient.

The user may wish to establish another allowance, either for the same or a different recipient. The user may simply click on the allowance link in order to establish another allowance. In addition, the user may be asked whether another allowance is desired at block 430. When another allowance is to be set up, the process returns to block 414 to being creating another allowance. Otherwise, the user may return to the web site home page (e.g., iTunes Music Store home page) at block 432.

The transfer of funds to a recipient account may be performed in a variety of ways. Specifically, the funds that are transferred by a user to a recipient account may be obtained from any source. For instance, the user may wish to use money from a gift certificate received by the user. More commonly, the user may wish to transfer funds from a user account to the recipient account, or to charge his or her credit card. In accordance with one embodiment, credit card information of the user is obtained in association with a user account of the user. Thus, in order to create or update an allowance, the user must log into this user account.

The user account is preferably separate from the recipient account. While the user and recipient may be the same individual, they will in most cases be two different individuals. These individuals may be unrelated. For instance, the individuals may be two friends or coworkers. Alternatively, the two individuals may be related (e.g., parent and child). Thus, in some circumstances, it may be desirable to create a related account in order for the user (e.g., parent) to be able to monitor and/or control the use of the funds by the recipient (e.g., child). For those accounts that are related, the user account may be referred to as a "parent account" and the recipient account may be referred to as a "sub-account" of the parent account. It is important to note that the user may create one or more recipient accounts, each of which may be related or unrelated to the parent account as a sub-account. Moreover, the sub-accounts are preferably unrelated to one another, and therefore each recipient's activities may not be monitored or controlled by another recipient.

In accordance with another embodiment of the invention, the user may control as well as monitor the activities of the recipient. Specifically, the user can view information associated with the recipient account. As one example, the user can view a purchase history of each sub-account associated with the parent account. While the user has access to the purchase history of the recipient account, the recipient does not have the same access to the parent account. Specifically, the recipient only view information such as a purchase history associated with the sub-account, but cannot view information associated with the parent account.

In addition to monitoring the activities of the recipient, the user can also control the activities of the recipient. Specifically, the items that can be purchased by the recipient using the allowance may be limited by the user to a subset of items available for purchase via a web site. For example, those items that are available for purchase from the web site may be media items such as albums or songs. In this example, the user may wish to prevent the recipient from purchasing songs and albums that include explicit lyrics or that have a parental advisory associated therewith.

FIG. 5 is a screen shot of a graphical user interface enabling an allowance to be set up in accordance with one embodiment of the invention. In accordance with one embodiment of the invention, the user must have an established user account with the web site in order to set up an allowance for a recipient. The user account must, at minimum, have a username (e.g., email address), password, and billing information associated therewith. The billing information typically includes credit card information such as credit card number and expiration date, billing address, and first and last name of the user.

Assuming that the user has an established user account with the web site, the user then sets up the allowance for the recipient. In this example shown in FIG. 5, the user may enter his or her name, as well as the recipient's name., This information can be used to enable a notification email to be generated and sent to the recipient. In this manner, the recipient will be notified of the person responsible for creating the allowance for his or her benefit. In some embodiments, the user may also select from or enter additional text to be provided in the confirmation email sent to the recipient.

In order to set up an allowance, the user selects an allowance increment. In this example shown in FIG. 5, the allowance increment may be selected (e.g., in increments of $10). In other embodiments, the user may enter any specified amount. In addition, in this example, the allowance is a monthly allowance. However, the period (e.g., month, week) may also be modified in other embodiments, as well as selected by the user.

The user may use a recipient's existing account, which may be accomplished by entering a username (e.g., email address) associated with the recipient account. Alternatively, the user may create an account for the recipient. This may be necessary if the recipient does not already have a recipient account. Alternatively, the user may wish to create another recipient account. This may be desirable, for example, to create accounts that are related.

In this manner, the user may monitor and/or control the purchases that the recipient makes with the allowance that has been set up for him or her.

If the recipient's account identifier (e.g., email address) cannot be found within the system, or the user does not know the recipient's account identifier, the user may create a new recipient account. While a credit card of the user or other means for crediting the user's funds is necessary, very little information is needed in order to create the recipient's account. Thus, this account is referred to as a "lite" account. Should the recipient later wish to increase the amount that he or she can purchase beyond the funds transferred as an allowance, the recipient may add his or her credit card information to complete the account.

FIG. 6 is a screen shot of a graphical user interface enabling a "lite" account to be set up for the recipient of the allowance in accordance with one embodiment of the invention. It is important to note that credit card information of the recipient is not needed since funds will be transferred from the user's account or associated credit card. For instance a credit card of the recipient or a billing address of the recipient is not required. Thus, in order to create the recipient account, the user merely enters the username (e.g., email address) of the recipient. In addition, the user may also enter the recipient's first and last name, as well as a temporary password.

In order for the recipient to use the funds in the recipient account to purchase goods from the web site, the recipient must provide this usemame and password to log on to the web site. The recipient may then change the temporary password in order to secure entry to his or her recipient account. In addition, the recipient may choose to update the recipient account with credit card information should the recipient wish to purchase goods with funds that exceed the allowance.

FIG. 7 is a screen shot of a window presented to the purchaser of the allowance in accordance with one embodiment of the invention. In this example, the message is presented to the user in the form of a window. In other embodiments, an email message may be transmitted to the user. In addition, the message may be sent each time money is transferred to the recipient account, rather than or in addition to providing such a message when then allowance is set up. This message indicates the allowance increment that will be deposited and the recipient (e.g., recipient identifier or usemame) of the recipient account. In addition, the message indicates that the allowance is being transferred to the recipient account in one or more allowance increments (e.g., 10 dollars) on a periodic basis (e.g., monthly). In this example, the funds are deposited on the first of each month. In this embodiment, the funds are deposited on the same day each month or period. However, it is also possible to deposit or transfer funds on other days of the month/period, such as the same day that the user creates the account. Alternatively, the user may select the time of the month or period during which the funds are to be deposited. For instance, the user may want the funds to be transferred in the middle of the month rather than at the beginning of the month.

FIG. 8 illustrates an exemplary message presented to the recipient of the allowance in accordance with one embodiment of the invention. In this example, the message is provided in an email to the recipient. Such a message may be sent when the allowance is created and/or when funds are transferred to the recipient account. In this example, the email is sent when the allowance is set up and indicates that an allowance has been set up for the recipient in a recipient account. As shown, the recipient email includes the usemame and password, thereby enabling the recipient to access the recipient account and the allowance that has been established. In addition, the allowance increment (10 dollars) and period (monthly) the expiration of which triggers the transfer or the allowance increment to the recipient account are specified in the recipient email. The user's name and recipient's name are provided as a means of personalizing the recipient email. In addition, the user may wish to provide additional text in order to explain the purpose or reason for the allowance. For instance, a parent may wish to congratulate and reward a child for his or her efforts in completing chores, homework, or for receiving exceptional grades.

In addition, the message sent to the recipient may include a link to a web site (e.g., iTunes Music Store) via which the recipient can access the recipient account. Software enabling the recipient to access the web site may be required to be installed on the recipient's computer, in accordance with various embodiments of the invention. Thus, the message sent to the recipient may also include a link enabling the recipient to download software enabling the recipient to access the web site via which the recipient can access the recipient account.

The various aspects, features, embodiments or implementations of the invention described above can be used alone or in various combinations. In addition, the media items can pertain to audio items (e.g., audio files or songs, such as for music), video items (e.g., video files or movies), or image items (e.g., photos).

The invention is preferably implemented by software, but can also be implemented in hardware or a combination of hardware and software. The invention can also be embodied as computer readable code on a computer readable medium. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

The advantages of the invention are numerous. Different embodiments or implementations may, but need not, yield one or more of the disclosed advantages. As set forth above, one advantage of the invention is that a user may create a recurring allowance for a recipient. Another advantage of the invention is that media items having offensive content or descriptors can be distinguishably displayed and/or altered to signal the presence of or remove of the offensive matter. Thus, the user may limit the use of the allowance by the recipient to the purchase of a limited set of items available for purchase at a specific web site. Similarly, the user may monitor the activities of the recipient account, and therefore the use of the allowance by the recipient.

The many features and advantages of the present invention are apparent from the written description and, thus, it is intended by the appended claims to cover all such features and advantages of the invention. Further, since numerous modifications and changes will readily occur to those skilled in the art, the invention should not be limited to the exact construction and operation as illustrated and described. Hence, all suitable modifications and equivalents may be resorted to as falling within the scope of the invention.

## Claims

1. A method for transferring an amount of money to a recipient account associated with a recipient, the amount of money being available for use by the recipient for purchase of goods over a network, said method comprising:
(a) receiving an allowance request from a user indicating a request to set up an allowance for a recipient, the allowance representing an amount of money being made available by the user to the recipient for purchase of one or more items over the network; and
(b) receiving an allowance increment or selection of an allowance increment, the allowance increment indicating an amount of money to be transferred to the recipient account on a periodic basis.

2. The method as recited in claim 1, wherein the allowance is a monthly allowance, and the allowance increment is to be transferred to the recipient account on a monthly basis.

3. The method as recited in claim 2, wherein when the allowance request is received after a specific date in the month, the allowance increment is to be transferred to the recipient account at the beginning of the next month.

4. The method as recited in claim 1, further comprising:
receiving, over the network, a selection of a period of time after expiration of which the allowance increment is to be transferred to the recipient account, wherein the allowance increment is to be transferred to the recipient account each time the period of time expires.

5. The method as recited in claim 4, further comprising:
modifying the period of time, thereby updating the allowance that has previously been set up for the recipient.

6. The method as recited in claim 4, wherein the period of time is a week or a month.

7. The method as recited in claim 1, wherein the allowance increment is to be transferred from a user account associated with the user to the recipient account on a periodic basis.

8. The method as recited in claim 1, wherein the allowance increment is to be transferred from a credit card associated with the user to the recipient account on a periodic basis.

9. The method as recited in claim 8, wherein credit card information associated with the credit card is established in association with a user account of the user.

10. The method as recited in claim 8, further comprising:
crediting the recipient account with the allowance increment; and
charging the credit card associated with the user.

11. The method as recited in claim 1, wherein credit card information of the recipient is not stored in association with the recipient account.

12. The method as recited in claim 1, wherein a username and password are stored in association with the recipient account.

13. The method as recited in claim 1, wherein an address of the recipient is not stored in association with the recipient account.

14. The method as recited in claim 1, wherein the recipient account is identified by a usemame or email address.

15. The method as recited in claim 1, further comprising:
receiving an identifier associated with the recipient account.

16. The method as recited in claim 15, wherein the identifier is a username or email address.

17. The method as recited in claim 1, further comprising:
receiving an identifier associated with the recipient account or creating the recipient account.

18. The method as recited in claim 1, further comprising:
creating the recipient account.

19. The method as recited in claim 18, wherein creating the recipient account comprises:
receiving an email address of the recipient; and
receiving a temporary password of the recipient.

20. The method as recited in claim 19, wherein creating the recipient account further comprises:
receiving a name of the recipient.

21. The method as recited in claim 1, wherein the user has a user account associated therewith, wherein the user account is separate from the recipient account.

22. The method as recited in claim 21, wherein the user is a first individual and the recipient is a second individual.

23. The method as recited in claim 22, wherein the user is a parent and the recipient is a child of the recipient.

24. The method as recited in claim 21, wherein the user account is a parent account and the recipient account is a sub-account of the parent account.

25. The method as recited in claim 24, wherein the recipient can view information associated with the sub-account, but cannot view information associated with the parent account.

26. The method as recited in claim 25, wherein the information is a purchase history.

27. The method as recited in claim 24, wherein the items that can be purchased by the recipient using the allowance are limited by the user.

28. The method as recited in claim 27, wherein the allowance can be used to purchase one or more items from a subset of items available for purchase via a web site.

29. The method as recited in claim 28, wherein the items are media items.

30. The method as recited in claim 29, wherein the media items include albums and songs.

31. The method as recited in claim 30, wherein the subset of media items available for purchase by the recipient include albums and songs that do not include explicit lyrics or have a parental advisory associated therewith.

32. The method as recited in claim 24, wherein the user can view a purchase history of each sub-account associated with the parent account.

33. The method as recited in claim 1, further comprising:
receiving a set of text to be provided in a message to the recipient indicating that an allowance has been set up for the recipient.

34. The method as recited in claim 1, further comprising:
sending a confirmation message to the user indicating that the allowance has been set up for the recipient.

35. The method as recited in claim 34, the confirmation message indicating that the allowance is being transferred to the recipient account in one or more allowance increments on a periodic basis.

36. The method as recited in claim 1, further comprising:
transmitting a message to the user indicating that the allowance increment has been transferred to the recipient account.

37. The method as recited in claim 36, the message being received on a periodic basis by the user when the allowance increment is transferred to the recipient account.

38. The method as recited in claim 1, wherein the allowance request is initiated via an allowance hypertext link.

39. The method as recited in claim 1, wherein the allowance can be used to purchase one or more items available for purchase via a web site.

40. The method as recited in claim 39, wherein the items are media items.

41. The method as recited in claim 40, wherein the media items include albums and songs.

42. The method as recited in claim 1, further comprising:
transferring an amount of money equal to the allowance increment to the recipient account.

43. The method as recited in claim 42, further comprising:
automatically repeating the transferring step on a period basis.

44. The method as recited in claim 1, further comprising:
receiving a request to update the allowance for the recipient.

45. The method as recited in claim 44, further comprising:
receiving a request to discontinue the allowance for the recipient.

46. The method as recited in claim 44, further comprising:
receiving a request to modify the allowance for the recipient.

47. The method as recited in claim 46, wherein modifying the allowance comprises:
receiving a request to modify the allowance increment to a second allowance increment.

48. The method as recited in claim 44, further comprising:
transmitting a message to the user indicating that the user can update the allowance for the recipient.

49. The method as recited in claim 48, wherein the message to the user indicates that the user needs to log in to update the allowance for the recipient.

50. A graphical user interface for use in facilitating the transfer of money to a recipient account associated with a recipient, the money being available for use by the recipient for purchase of goods over a network, comprising:
a recipient identifier field identifying a recipient of an allowance or identifying the recipient account, the allowance representing an amount of money being made available by a user for use by the recipient for purchase of one or more items over the network; and
an allowance field enabling input or selection of an allowance increment, the allowance increment indicating an amount of money to be transferred to the recipient account on a periodic basis.

51. The graphical user interface as recited in claim 50, wherein the recipient identifier field is adapted for receiving a recipient username or recipient name.

52. A system adapted for implementing two or more related accounts, each of the related accounts being capable of performing one or more transactions via a web site over the Internet, the system comprising:
a parent account; and
one or more sub-accounts;
wherein a user associated with the parent account has authority to view a transaction history of each of the sub-accounts and authority to limit transactions that can be performed by each of the sub-accounts;
wherein a user associated with each of the sub-accounts can view information associated with the corresponding sub-account, but cannot view information associated with the parent account.

53. A computer readable media including computer program code for transferring an amount of money to a recipient account associated with a recipient, the amount of money being available for use by the recipient for purchase of goods over a network, said computer readable medium comprising:
computer program code for receiving an allowance request from a user indicating a request to set up an allowance for a recipient, the allowance representing an amount of money being made available by the user to the recipient for purchase of one or more items over the network; and
computer program code for receiving an allowance increment or selection of an allowance increment, the allowance increment indicating an amount of money to be transferred to the recipient account on a periodic basis.

54. Computer program code executable by a data processing device to provide the method of any of claims 1 to 49.

55. A computer readable medium bearing computer program code as claimed in claim 54.
